**Europäisches Patentamt**

**European Patent Office**

**Office européen des brevets**

(19)

(11) **EP 1 052 569 A2**

(12) **EUROPÄISCHE PATENTANMELDUNG**

(43) Veröffentlichungstag:
**15.11.2000 Patentblatt 2000/46**

(51) Int Cl.⁷: **G06F 7/58**

(21) Anmeldenummer: **00109785.6**

(22) Anmeldetag: **09.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.05.1999 DE 19921852**

(71) Anmelder: **ROBERT BOSCH GMBH**
**70442 Stuttgart (DE)**

(72) Erfinder:
• **Bertram, Gerold**
**30459 Hannover (DE)**
• **Lehning, Michael**
**31137 Hildesheim (DE)**

(54) **Pseudozufallszahlgenerator**

(57)     Bei einem Pseudozufallszahlgenerator, insbesondere nach der Norm ETS 300 174, wird vorgeschlagen, für bitweise logische Operationen Logikschaltungen (15) vorzusehen, die eingerichtet sind, Operationen an N Bit breiten Argumenten zuzuführen und die an N einzelne Bitleitungen von Ausgabeanschlüssen (a1,a2,a3,b1,...,d3) der N Registerketten angeschlossen sind.

Fig. 6

**Beschreibung**

Die Erfindung betrifft einen Pseudozufallszahlgenerator zum Erzeugen von N Pseudozufallszahlen von $2^n$ Bit Breite, mit wenigstens einer rückgekoppelten Registerkette, die m Plätze für jeweils N Datenwörter mit jeweils i Bit Breite, Eingabeanschlüsse zum Initialisieren der Registerkette und Ausgabeanschlüsse aufweist, wobei die Datenwörter mit jedem Arbeitstakt des Pseudozufallszahlgenerators von einem Platz auf einen folgenden übertragen werden, sowie mit wenigstens einer arithmetisch-logischen Schaltung zum Durchführen einer arithmetisch-logischen Operation an den Datenwörtern während der Übertragung von einem Platz zum folgenden sowie mit einer oder mehreren Logikschaltungen zum Durchführen von bitweisen logischen Operationen, die an bestimmte Ausgabeanschlüsse der Registerketten angeschlossen sind.

Ein solcher Pseudozufallszahlgenerator für N=1 ist aus der Norm ETS 300 174 bekannt. Dieser Pseudozufallszahlgenerator wird eingesetzt zum Verwürfeln von Daten eines digitalen Datenstroms, in dem die einzelnen Bytes des Stroms jeweils mit einem von dem Pseudozufallszahlgenerator erzeugten Byte XOR-verknüpft werden.

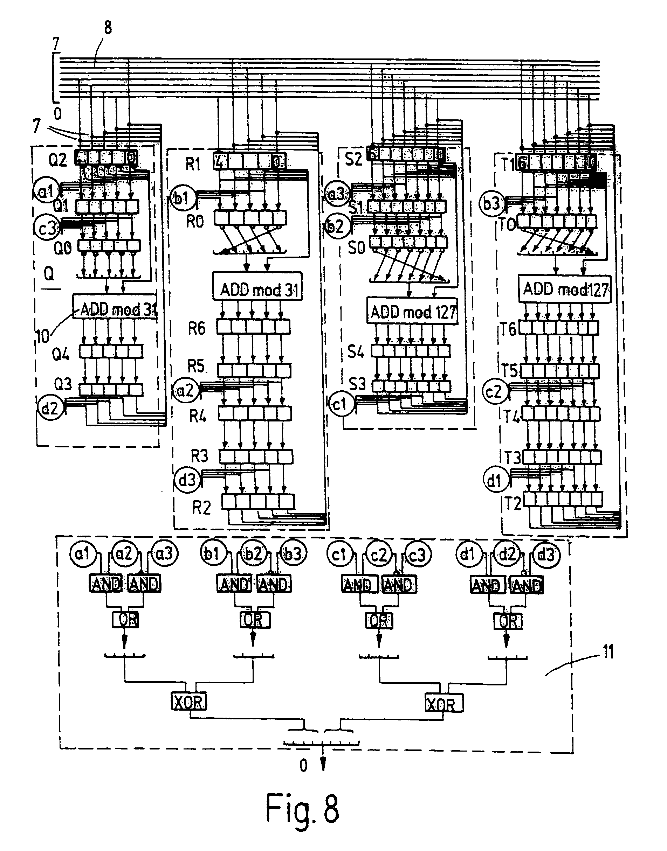

Dieser bekannte Pseudozufallszahlgenerator ist in Figur 8 dargestellt. Er umfaßt vier Registerketten, mit Q, R,S,T bezeichnet, die jeweils 5, 7, 5 beziehungsweise 7 Register mit einer Breite von 5, 5, 7 beziehungsweise 7 Bit haben. Es soll im folgenden nur exemplarisch der Aufbau der Q-Registerkette erläutert werden, die anderen Registerketten sind im wesentlichen analog zu dieser aufgebaut.

Die Ein- und Ausgänge der einzelnen Register der Kette sind im Kreis miteinander verknüpft, so daß mit jedem Arbeitstakt des Pseudozufallszahlgenerators der Inhalt des Registers Q2 nach Q1, von Q1 nach Q0, von Q0 unter Ausführung einer arithmetisch-logischen Operation, die noch genauer erläutert wird, nach Q4 beziehungsweise von Q4 nach Q3 übertragen wird. Die Ausgänge des Registers Q3 sind mit den Eingängen des Registers Q2 über XOR-Gatter 7 verbunden, die bei der Übertragung des Inhalts von Q3 nach Q2 eine XOR-Verknüpfung dieses Inhalts mit gleichzeitig auf einem Bus 8 anliegenden Daten bilden.

Der Bus 8 dient zum Initialisieren der Registerkette. Indem bei Inbetriebnahme des Pseudozufallszahlgenerators oder nach einem Rücksetzen Datenbytes in einem der Zahl der Register der längsten Kette entsprechenden Zahl auf den Bus 8 gegeben und in die Register eingetaktet werden, wird ein Anfangszustand des Generators eingestellt, durch den die später zu erzeugende Zahlenfolge prädeterminiert ist.

Zwischen den Registern Q0 und Q4 ist eine arithmetisch-logische Schaltung 10 vorgesehen, die eine modifizierte Modulo-Operation an der Summe aus den bitweise negierten Inhalten der Register Q0 und Q2 ausführt. Diese modifizierte Modulo-Operation genügt der Formel

$$(A+B)\bmod K = \begin{cases} A+B \; falls\,(A+B) \le K \\ A+B-(K) \; falls\,(A+B) > K \end{cases} \tag{1}$$

wobei A und B jeweils die negierten Registerinhalte sind und K = $2^i$-1 ist. Für die hier beispielhaft betrachteten Q-Register mit i=5 gilt also k=31; in den 7 Bit breiten Registerketten S und T ist jeweils eine entsprechende Schaltung vorgesehen, die eine Operation modulo $2^7$ - 1 = 127 ausführt.

Die Ausgänge von jeweils 4 Bits einzelner Register, namentlich der Register Q1, Q2, Q3 sind an eine Logikschaltung 11 angeschlossen, die zunächst die Ausgabewerte von je 2 Registern UND-verknüpft, und die zwei der so erhaltenen Ergebnisse dann ODER-verknüpft. So gewinnt die Logikschaltung vier Datenwörter von je vier Bit Breite. Jeweils zwei von diesen Datenwörtern werden XOR-verknüpft und ergeben jeweils 4 Bits einer 8 Bit breiten Pseudozufallszahl, die ausgegeben wird.

Vorteile der Erfindung

Durch die Erfindung wird ein Pseudozufallszahlgenerator der oben beschriebenen Art geschaffen, der die parallele Erzeugung von N Pseudozufallszahlen gemäß den in der Norm ETS 300 174 festgelegten Anforderungen mit minimalem Schaltungsaufwand und hoher Erzeugungsgeschwindigkeit ermöglicht.

Zu diesem Zweck ist erfindungsgemäß vorgesehen, daß die Logikschaltung(en), die bitweise logische Operationen an den von bestimmten Ausgabeanschlüssen der Registerkette ausgegebenen Werten durchführen, jeweils an N einzelnen Bitleitungen, vorzugsweise mit gleichem Stellenwert, von Ausgabeanschlüssen der N Registerketten angeschlossen sind. Insbesondere wenn die Zahl N der parallel zu erzeugenden Pseudozufallszahlen = 8 oder ein Mehrfaches von 8 ist, können für diese bitweisen logischen Verknüpfungen auf dem Markt verbreitete Logikschaltungen eingesetzt werden, die in der Lage sind, 8 Bit oder ein Mehrfaches davon parallel zu verarbeiten.

Die Norm ETS 300 174 sieht des weiteren vor, daß die für die Verwürfelungsoperationen in den Registerketten benutzten Register mit 5 beziehungsweise 7 Bit Breite benutzt werden. Diese Register sind mit existierenden integrierten Schaltkreisen nur unökonomisch zu realisieren, da existierende Schieberegister der hier benötigten Art in der Regel in Breiten angeboten werden, die Zweierpotenzen entsprechen. Dies bedeutet, daß für die einzelnen Register jeder Kette jeweils 8 Bit breite Einzelregister eingesetzt werden müssen, von denen in den Registerketten Q und R jeweils 3 und den Registerketten S und T jeweils ein Bit ungenutzt bleiben.

Eine bevorzugte Ausgestaltung der Erfindung vermeidet diesen Nachteil und kommt somit zu einer effizienteren und kostengünstigeren Schaltungsstruktur, indem anstelle von Ketten diskreter Register, die jeweils ein vollständiges Datenwort enthalten, Registerketten eingesetzt werden, die aus Speicherzellen von N Bit Breite aufgebaut sind, wobei eine dieser Speicherzellen jeweils Bits mit gleichem Stellenwert von N Datenwörtern enthält. Der Ausgang jeder Speicherzelle dieser Registerkette ist mit einem Eingang einer anderen Speicherzelle der gleichen Registerkette verknüpft, so daß mit jedem Arbeitstakt des Zufallszahlengenerators die Datenwörter innerhalb dieser gleichen Registerkette um einen Platz weiter wandern.

Die Registerketten können in Form von Schieberegisterbausteinen implementiert sein, in denen in jedem Arbeitstakt des Pseudozufallszahlgenerators die Inhalte der Speicherzellen weitergetaktet werden.

Eine besonders einfache und preiswerte arithmetisch-logische Schaltung, die die oben erwähnte, für die Pseudozufallszahlenerzeugung benötigte modifizierte Modulo-Operation mit einfachen und verbreiteten Schaltungskomponenten zu realisieren gestattet, umfaßt zwei parallele Volladdiererketten von jeweils i Bit Breite und einen an den Ausgängen der Volladdiererketten angeschlossenen Multiplexer, wobei ein Übertragseingang des ersten Volladdierers mit logisch 1 und ein Übertragseingang des zweiten Volladdierers mit logisch 0 beschaltet ist, und ein Steuereingang eines Multiplexers mit einem Übertragsausgang der zweiten Volladdiererketten verbunden ist.


Figuren


Figur 1                    zeigt ein schematisches Blockdiagramm eines erfindungsgemäßen Pseudozufallszahlgenerators;

Figuren 2 bis 5        zeigen den Aufbau von Registerketten Q,R,S und T eines Pseudozufallszahlgenerators;

Figur 6                    zeigt schematisch die Logikschaltungen eines Pseudozufallszahlgenerators;

Figur 7                    zeigt ein Blockschaltbild einer arithmetisch-logischen Schaltung zur Durchführung einer modifizierten Modulo-Operation;

Figur 8                    zeigt schematisch die Struktur des Pseudozufallszahlengenerators gemäß ETS 300 174.


Beschreibung der Ausführungsbeispiele


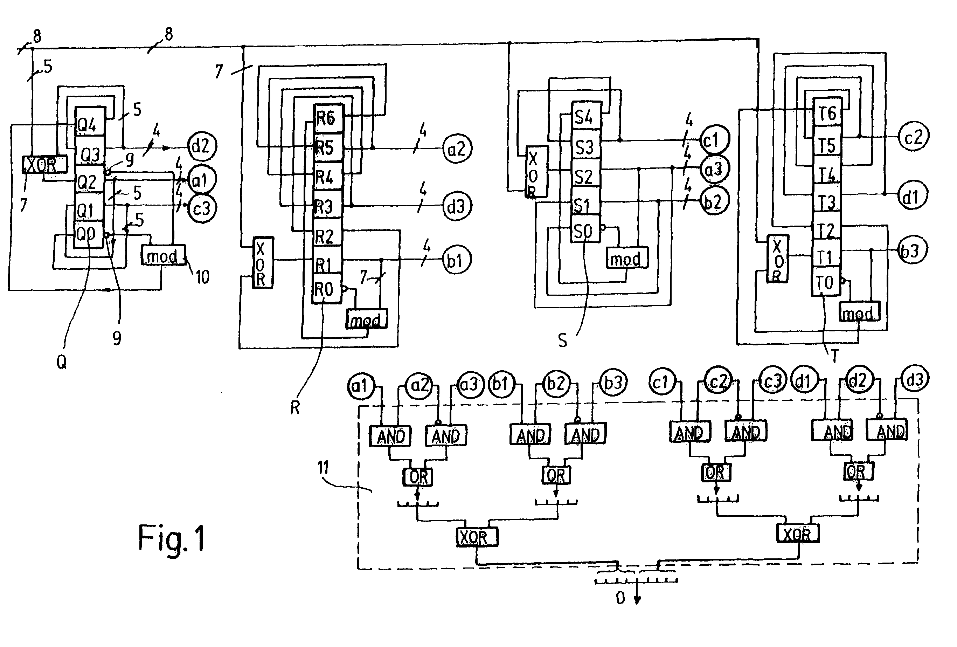

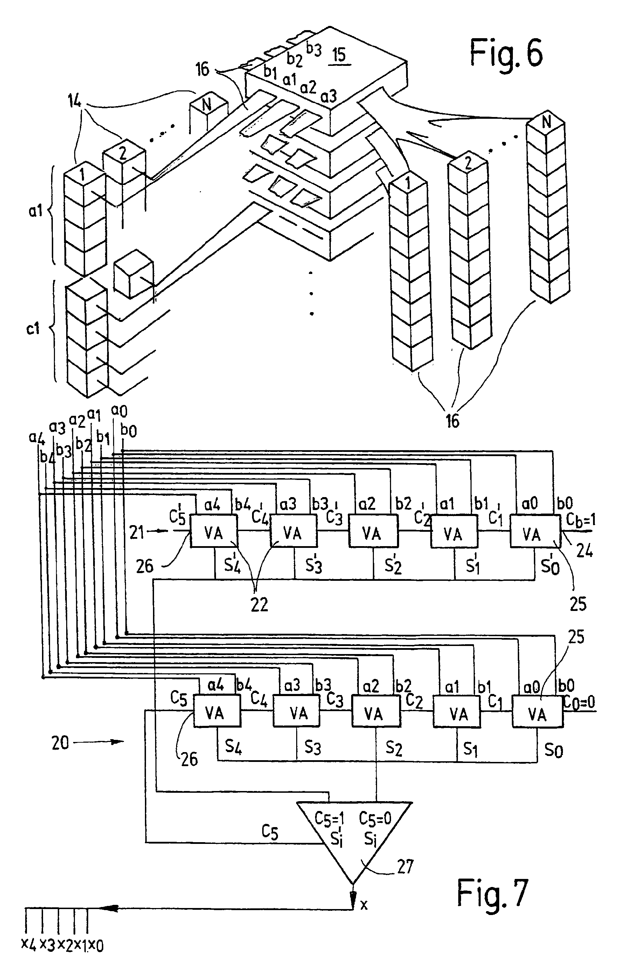

Figur 1 zeigt ein schematisches Blockdiagramm des erfindungsgemäßen Pseudozufallszahlgenerators. Er umfaßt vier Registerketten Q, R, S und T mit jeweils 5,7,5 und 7 Plätzen Q0 bis Q4, RO bis R6 ..., T0 bis T6, die jeweils eine Speicherkapazität von 5N,5N, 7N beziehungsweise 7N Bit haben. Die Registerketten umfassen somit jeweils 25, 35, 35 und 49 Schieberegisterzellen mit jeweils N Bit Speichervermögen. Die Zellen eines jeden Platzes enthalten jeweils N Bits mit gleichem Stellenwert von N Datenwörtern. Der Wert von N kann zum Beispiel 8,16 oder 32 betragen. Der Ausgang jeder Zelle eines Platzes einer Registerkette ist auf den Eingang einer anderen Zelle eines anderen Platzes der gleichen Kette rückgekoppelt, so daß mit Empfang eines Taktsignals über eine (nicht dargestellte) Taktleitung die Inhalte der einzelnen Zellen jeweils von einem Platz zum nächsten weitergereicht werden. Genauer gesagt sind die Ausgänge eines Platzes $Q_k$ (für $k \geq 1$) jeweils mit den Eingängen des Platzes $Q_{k-1}$ verbunden, und die Ausgänge des Platzes Q0 sind genauso wie die des Platzes Q2 über Negationsgatter 9 mit Eingängen einer arithmetischlogischen Schaltung 10 verbunden, die in Figur 7 detailliert dargestellt ist. Die Ausgänge dieser Schaltung 10 führen auf die Eingänge des Platzes Q4. Zwischen den Ausgängen von Q3 und den Eingängen von Q2 befindet sich eine Gruppe von 5N XOR-Gattern 7, die jeweils einen an eine Ader eines Datenbusses 8 angeschlossenen Eingang haben. Der Datenbus 8 dient der Initialisierung des Pseudozufallszahlgenerators, wie in Bezug auf Figur 8 beschrieben.

Die Ausgänge von jeweils vier Registerzellen der Plätze Q3, Q2, Q1 führen zu mit d2, a1 beziehungsweise c3 bezeichneten Punkten der Schaltung, die als Ausgabeanschlüsse der Registerkette Q aufgefaßt werden können und die mit entsprechend bezeichneten Eingängen einer Logikschaltung 11 verbunden sind.

Diese Logikschaltung 11 verknüpft durch bitweise logische Operationen die von diesen Ausgabeanschlüssen und von funktionsgleichen Ausgabeanschlüssen der anderen Registerketten R, S und T abgegriffenen Werte zu einer 8 Bit breiten Pseudozufallszahl.

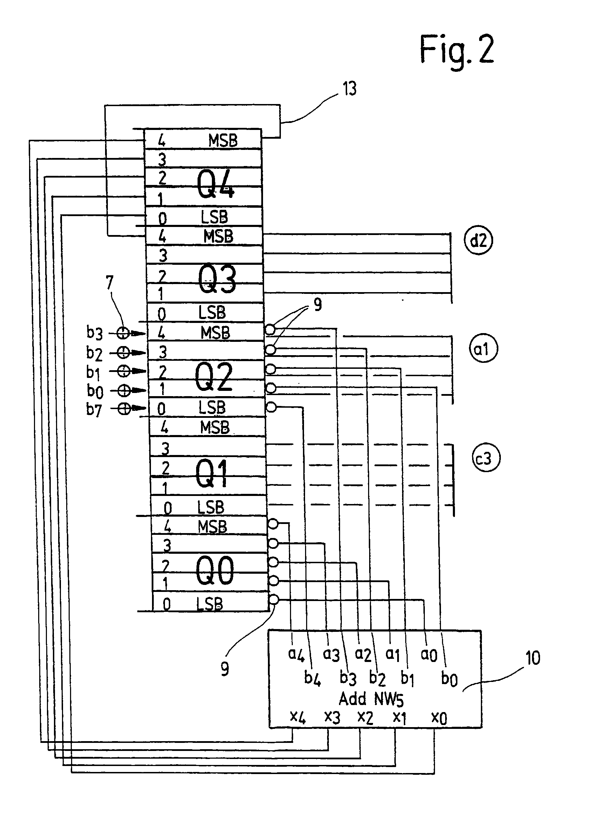

Figur 2 zeigt detaillierter den Aufbau der Registerkette Q. Verbindungen 13 zwischen den Ausgängen der Zellen eines Platzes und Eingängen der Zellen des nächsten Platzes sind bis auf eine nicht dargestellt, um die Übersichtlichkeit der Zeichnung zu wahren. Die Eingänge des Platzes Q2 sind über die XOR-Gatter 7 mit Leitungen b3, b2, b1, b0, b7 des Datenbusses 8 verknüpft. Die Ausgänge der Registerzellen, die die vier signifikanteren Bits dieses Platzes enthalten, führen zum Schaltungspunkt al. Die Ausgänge des Platzes Q2 sind ferner, ebenso wie die des Platzes Q0, über Negationsgatter 9 mit Eingängen der arithmetisch-logischen Schaltung 10 verbunden, wobei allerdings, wie in der Figur im einzelnen dargestellt, die Leitungen zwischen dem Platz Q2 und der Schaltung 10 überkreuz verdrahtet sind, so daß in der Schaltung 10 jeweils Bits aus Q2 und Bits aus Q0 mit unterschiedlichen Stellenwerten verknüpft werden. Das Ergebnis der Verknüpfung wird dem Platz Q4 zugeführt.

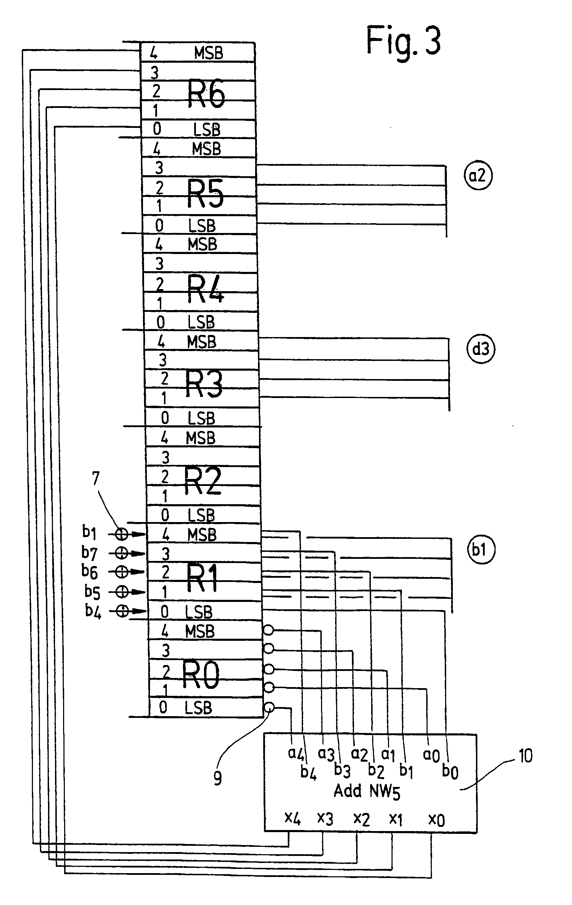

Figur 3 zeigt den Aufbau dieser Registerkette in der gleichen Darstellung wie Figur 2 für die Registerkette Q.

Das Aufbauprinzip dieser Registerkette ist das gleiche wie bei der Registerkette Q; Unterschiede beschränken sich auf die Bitleitungen des Busses 8, mit denen der Platz R1 über die XOR-Gatter 7 verbunden ist, und auf die Nummern der Plätze, die über Schaltungspunkte a2, d3, b1 mit der Logikschaltung 11 verbunden sind. Außerdem sind hier die Ausgänge des Platzes R1 ohne zwischengeschaltete Negationsgatter mit der arithmetisch-logischen Schaltung 10 verknüpft. Da Details dieser Verschaltung eindeutig aus der Figur zu entnehmen sind, erübrigt sich eine explizite Beschreibung.

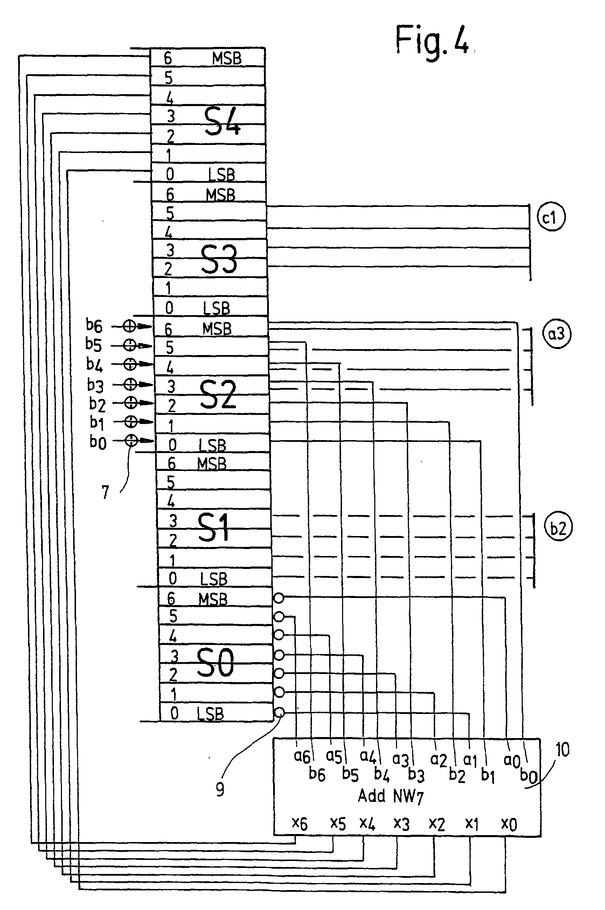

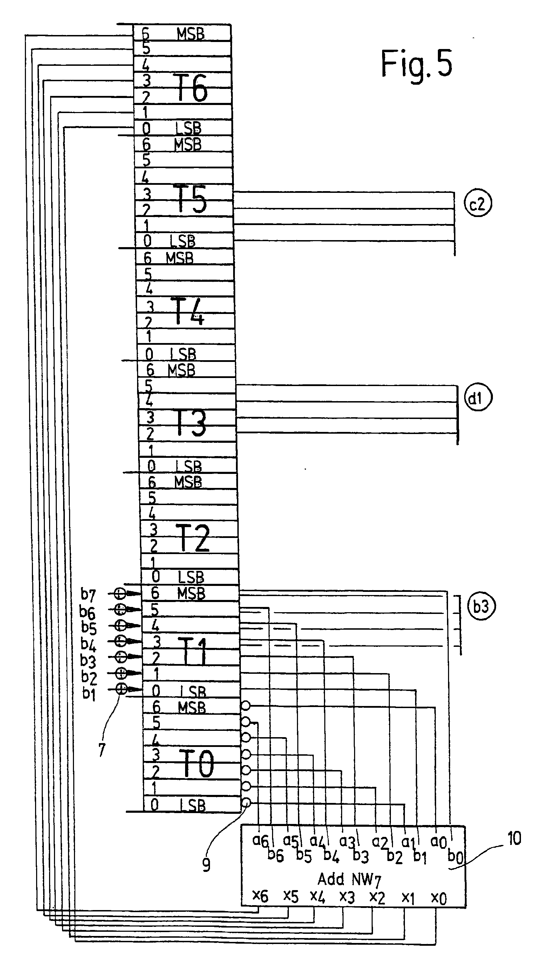

Die Figuren 4 und 5 zeigen jeweils in analoger Darstellung wie die Figuren 2 und 3 die Struktur der Registerketten S und T. Details der Verdrahtung sind wiederum den Figuren eindeutig entnehmbar und brauchen nicht im einzelnen beschrieben zu werden.

Figur 6 zeigt die Logikschaltungen, die beim erfindungsgemäßen Pseudozufallszahlgenerator die Funktion der Logikschaltung 11 aus Figur 8 übernehmen. Jede der vier oben beschriebenen Registerketten Q,R,S,T liefert an einem ihrer Ausgänge a1, a2, a3, b1 .... d3 in jedem Arbeitstakt des Generators N vier Bit breite Datenwörter, die unabhängig voneinander von den Logikschaltungen zu N Pseudozufallszahlen von 8 Bit Breite weiter verarbeitet werden sollen. Diese Datenwörter sind in Figur 6 als Anordnungen von N Säulen 14 aus je vier Blöcken symbolisiert. Vier identische Logikschaltungen 15 sind jeweils Bits mit gleichem Stellenwert der Ausgänge a1, a2, a3, b1, b2, b3 aller vier Registerketten zugeordnet. Weitere vier, die in der Figur nicht einzeln dargestellt sind, sind den Punkten c1, c2, c3, d1, d2, d3 zugeordnet. Jede dieser Logikschaltungen 15 empfängt, wie durch Datenleitungen 16 symbolisch dargestellt, N Bits mit gleichem Stellenwert von jedem dieser Ausgänge und führt an diesen Bits folgende logische Operationen aus:

$$\left[(a1 \wedge a2) \vee (\overline{a2} \wedge a3)\right] \times \left[(b1 \wedge b2) \vee (\overline{b2} \wedge b3)\right]$$
$$beziehungs\ weise \left[(c1 \wedge c2) \vee (\overline{c2} \wedge c3)\right] \times \left[(d1 \wedge d2) \vee (\overline{d2} \wedge d3)\right] \qquad (2)$$

$\wedge$=AND
$\vee$=OR
$\times$=XOR

und erzeugt so N Bits mit gleichem Stellenwert, die auf N Pseudozufallszahlen, dargestellt als Säulen 16, verteilt werden.

Während also bei dem herkömmlichen, nicht parallelen Zufallszahlengenerator die bitweisen logischen Verknüpfungen der Schaltung 11 für jeweils Gruppen von vier Bit entsprechend der Zahl der Leitungen an jedem Schaltungspunkt al bis d3 vorgenommen werden, entspricht hier die Zahl der parallel verarbeiteten Bits der Zahl der parallel zu erzeugenden Pseudozufallszahlen. Dies ermöglicht die Verwendung von modernen, schnellen Signalprozessoren mit Verarbeitungsbreiten von 16 oder 32 Bit, die bei der Einzelerzeugung unökonomisch ist.

Figur 7 zeigt den Aufbau der arithmetisch-logischen Schaltung 10 mit 5 Bit Breite, wie sie zum Beispiel an den Registerketten Q und R eingesetzt wird. Die entsprechende Schaltung für die Registerketten S und T unterscheidet sich von dieser lediglich durch ihre Breite und braucht nicht gesondert beschrieben zu werden.

Diese arithmetisch-logische Schaltung ist ohne Änderungen auch zur Verwendung in einem Generator für einzelne Pseudozufallszahlen geeignet.

Die arithmetisch-logische Schaltung 10 führt eine modifizierte Modulo-Operation nach der Formel

$$(A+B)\bmod(2^i-1)=\begin{cases}A+B\ falls\ (A+B)<2^i\\A+B-(2^i-1)\ falls\ (A+B)\geq 2^i\end{cases}\qquad(3)$$

aus.

Eine direkte Realisierung einer Schaltung nach dieser Formel erfordert eine Additionseinheit mit anschließender Vergleichs- und Subtraktionseinheit. Dies führt zu einem hohen Berechnungs- beziehungsweise Schaltungsaufwand und entsprechend hohen Kosten der Schaltung. Figur 7 zeigt eine einfachere Lösung. Zwei Ketten 20, 21 zu je 5 Volladdierern 22 mit einem Bit Breite haben Dateneingänge, die jeweils parallel geschaltet die Eingänge a0 bis a4, b0 bis b4 der Schaltung 10 für die Eingangswerte A, B bilden. Ein Übertragseingang 24 des niedrigstwertigen Addierers 25 der Kette 21 ist fest mit einem logischen Pegel 1 verbunden; der Übertragsausgang 26 des höchstwertigen Bits bleibt unberücksichtigt. Diese Kette liefert als Additionsergebnis (A + B + 1) mod 32.

Die zweite Addiererkette 20 unterscheidet sich von der ersten 21 allein dadurch, daß der Übertragseingang ihres niedrigstwertigen Addierers 25 fest auf dem Wert 0 liegt. Sie liefert somit das Ergebnis (A + B) mod 32. Nun ist allerdings (A + B) mod 32 = (A + B) mod 31, solange A + B < 31 ist. In diesem Fall liefert also die Addiererkette 20 das korrekte Ergebnis. Wenn A+B=31, wird 31 als Ergebnis geliefert, wie von der Norm ETS 300 174 gefordert. Wenn die Summe von A + B = 32 oder größer ist, genügt das Ergebnis der Kette 21 der Formel, außerdem gibt in diesem Fall die Kette 20 am Übertragsausgang ihres höchstwertigen Addierers ein Übertragssignal aus, das die Unterscheidung der beiden Fälle gestattet. Dieses Übertragssignal wird an den Speichereingang eines Multiplexers 27 geführt, der, wenn das Übertragsbit 0 ist, das Ergebnis der Kette 20 und andernfalls das Ergebnis der Kette 21 an den Ausgang der Schaltung 10 durch gibt. So wird die Operation nach Formel (3) mit geringem Schaltungsaufwand und hoher Rechengeschwindigkeit ausgeführt.

**Patentansprüche**

1.  Pseudozufallszahlgenerator zum Erzeugen von N Pseudozufallszahlen von $2^n$ Bit Breite, mit wenigstens einer rückgekoppelten Registerkette, die m Plätze für jeweils N Datenwörter mit jeweils i Bit Breite, Eingabeanschlüsse zum Initialisieren der Registerkette und Ausgabeanschlüsse aufweist, wobei die Datenwörter mit jedem Arbeitstakt des Pseudozufallszahlgenerators von einem Platz auf einen folgenden übertragen werden, sowie mit wenigstens einer arithmetisch-logischen Schaltung zum Durchführen einer arithmetisch-logischen Operation an den Datenwörtern während der Übertragung von einem Platz zum folgenden, sowie mit einer oder mehreren Logikschaltungen zum Durchführen von bitweisen logischen Operationen, die an bestimmte Ausgabeanschlüsse der Registerketten angeschlossen sind, **dadurch gekennzeichnet**, daß die Logikschaltungen (15) eingerichtet sind, Operationen an N Bit breiten Argumenten auszuführen und an N einzelne Bitleitungen von Ausgabeanschlüssen (a1,a2,a3,b1 ...,d3) jeder Registerkette (Q,R,S,T) angeschlossen sind, wobei N>1 ist.

2.  Pseudozufallszahlgenerator nach Anspruch 1, **dadurch gekennzeichnet**, daß N = 8 oder ein Mehrfaches von 8 ist.

3.  Pseudozufallszahlgenerator nach Anspruch 1 oder 2, **dadurch gekennzeichnet**, daß er $2^n$ Logikschaltungen (15) umfaßt, und daß jede Logikschaltung (15) an Bitleitungen mit gleichem Stellenwert der Ausgabeanschlüsse (a1,a2,a3,b1,...,d3) angeschlossen ist.

4.  Pseudozufallszahlgenerator nach Anspruch 1,2 oder 3, **dadurch gekennzeichnet**, daß jede Registerkette (Q,R, S,T) aus Speicherzellen von N Bit Breite aufgebaut ist, und daß eine der Speicherzellen jeweils Bits mit gleichem Stellenwert von N Datenwörtern enthält.

5.  Arithmetisch-logische Schaltung für einen Pseudozufallszahlgenerator nach einem der vorhergehenden Ansprüche, **dadurch gekennzeichnet**, daß sie zwei parallele Volladdiererketten (20,21) von jeweils i Bit Breite und einen an die Ausgänge der Ketten (20,21) angeschlossenen Multiplexer (27) umfaßt, wobei ein Übertragseingang (24) der ersten Kette (21) mit logisch 1 und ein Übertragseingang der zweiten Kette (20) mit logisch 0 beschaltet ist und ein Steuereingang des Multiplexers (27) mit einem Übertragsausgang (26) der zweiten Kette (20) verbunden ist.

Fig.1

EP 1 052 569 A2

# Fig. 2

Fig. 3

EP 1 052 569 A2

## Fig. 4

Fig. 5

Fig. 6

Fig. 7

Fig. 8